# EUROPÄISCHE PATENTSCHRIFT

(11) **EP 2 068 426 B1**
(45) Veröffentlichungstag und Bekanntmachung des Hinweises auf die Patenterteilung: **26.04.2017**
(21) Anmeldenummer: 07291138.1
(22) Anmeldetag: 25.09.2007
(51) Int. Cl.: H02K 3/24, H02K 3/34, H01B 7/42

(54) **Elektrischer Wickelleiter mit rechteckigem Querschnitt**
Electric coil conductor with rectangular cross-section
Conducteur d'enroulement électrique à section transversale rectangulaire

(43) Veröffentlichungstag der Anmeldung: 10.06.2009
(73) Patentinhaber: Essex Europe SAS, 60200 Compiègne (FR)
(72) Erfinder: Tillner, Siegbert, 57339 Erndtebrück (DE)
(74) Vertreter: Intès, Didier Gérard André

(56) Entgegenhaltungen:
- EP-A- 1 079 500
- DE-A1- 1 614 582
- DE-A1- 19 903 137
- US-A- 3 956 724
- US-A- 4 739 200

## Beschreibung

Die Erfindung bezieht sich auf einen elektrischen Wickelleiter mit rechteckigem Querschnitt zur Herstellung einer Wicklung für elektrische Geräte, die eine als Kühlmittel dienende Flüssigkeit enthalten, in welche die Wicklung in Gebrauchslage eingetaucht ist (EP 1 079 500 A1).

Ein solcher Wickelleiter wird in der Regel zunächst mit einer Isolierung versehen und anschließend zu einer Wicklung verarbeitet, die beispielsweise in Transformatoren oder in elektrischen Maschinen eingesetzt wird. Die Windungen der Wicklung sind gegeneinander isoliert. Das kann beispielsweise gemäß der DE 199 03 137 A1 durch Aufbringen von Lackschichten geschehen oder in einer anderen bekannten Technik durch Umwickeln des Wickelleiter mit Papier.

Aus der US-A-3 956 724 geht eine supraleitfähige Wicklung mit der Kühlung dienenden Durchlässen hervor. Die einzelnen Leiter der Wicklung haben einen polygonalen Querschnitt. Sie liegen mit jeweils einer Fläche des Polygons unter Zwischenschaltung von Isoliermaterial aneinander. Die anderen Flächen des jeweiligen Polygons der Leiter schließen beispielsweise quadratische Durchlässe zwischen sich ein, durch welche ein Kühlmittel geleitet werden kann.

Die DE 1 614 582 A1 beschreibt eine Supraleitungsspule, die aus einem bandförmigen Leiter aufgebaut ist. Der Leiter besteht aus mehreren, nebeneinander angeordneten litzenförmigen Teilleitern und einem Armierungsband. Um das Armierungsband sind mit Abstand zueinander Kupferbänder herumgewickelt, an denen die litzenförmigen Teilleiter anliegen. Zwischen den Windungen der Kupferbänder sind Kühlkanäle gebildet, durch welche ein Kühlmittel geleitet werden kann.

In der eingangs erwähnten EP 1 079 500 A1 ist ein isolierter Wickelleiter beschrieben, der in vielen als Teilleiter bezeichneten Lagen zu einem sogenannten Drilleiter verarbeitet ist. Ein solcher Drilleiter wird beispielsweise in Wicklung für Transformatoren eingesetzt, in denen Öl als Kühlmittel enthalten ist. Seine Teilleiter liegen mit ihren Flachseiten dicht und fest aneinander. Der Drilleiter ist zu seiner Stabilisierung mit einer Umwicklung versehen, die aus einem perforierten Band besteht. Die Perforationen sollen eine verbesserte Kühlung des Drilleiters ermöglichen. US 4,739,200 offenbart einen elektrischen Wickelleiter gemäß dem Oberbegriff des Anspruchs 1.

Der Erfindung liegt die Aufgabe zugrunde, den eingangs geschilderten Wickelleiter so zu gestalten, daß die Kühlung und die elektrische Isolation einer mit demselben hergestellten Wicklung verbessert sind.

Diese Aufgabe wird durch den Gegenstand des Anspruchs 1 gelöst.

Eine Wicklung, die mit einem solchen Wickelleiter hergestellt ist, weist Windungen auf, zwischen denen Freiräume vorhanden sind, deren Größe durch die am Wickelleiter angebrachten Erhöhungen bestimmt ist. Die Windungen werden durch die Erhöhungen auf Abstand gehalten, so daß im Einsatzfall das flüssige Kühl- und/oder Isolationsmedium, insbesondere Öl, an jede einzelne Windung gelangt. Dadurch ist insgesamt eine wesentlich verbesserte Abfuhr der von der jeweiligen Wicklung erzeugten Wärme erreicht. Die Lebensdauer der Wicklung wird damit ebenso erhöht wie die des damit ausgerüsteten Geräts. Die gleichen Vorteile ergeben sich, wenn der Wickelleiter als Teilleiter in einem Drilleiter eingesetzt wird, aus dem eine entsprechende Wicklung hergestellt wird.

Die am fertigen Wickelleiter vorhandenen Erhöhungen können auf unterschiedliche Art und Weise erzeugt werden, und zwar beispielsweise wie folgt:
- Es können punkt- bzw. kreisförmige oder auch streifenförmige Erhöhungen aus Isoliermaterial mit sinnvollem Abstand zueinander auf den blanken Wickelleiter oder auf eine bereits vorhandenen Isolierschicht aufgebracht werden.
- Eine auf den Wickelleiter aufzubringende Isolierschicht kann unterschiedliche Dicken aufweisen, wobei entsprechende Verdickungen wieder in sinnvollen Abständen zueinander angebracht sind.
- Um den blanken oder bereits mit einer Isolierschicht versehenen Wickelleiter können mit Abstand zueinander Umwicklungen angebracht werden.

Ausführungsbeispiele des Erfindungsgegenstandes sind in den Zeichnungen dargestellt.

Es zeigen:
Fig. 1 in schematischer Darstellung einen Ausschnitt aus einer mit einem Wickelleiter nach der Erfindung ausgerüsteten Wicklung.
Fig. 2 bis 6 unterschiedliche Ausführungsformen des Wickelleiters in vergrößerten Darstellungen.

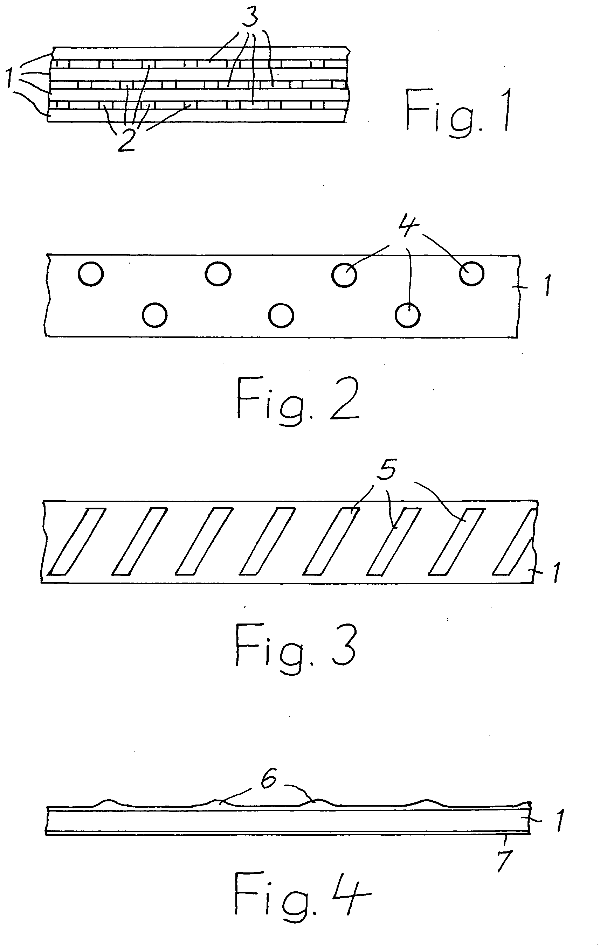

In Fig. 1 sind Abschnitte von vier Windungen eines als Flachdraht mit rechteckigem Querschnitt ausgebildeten Wickelleiters 1 aus Kupfer dargestellt, die durch aus Isoliermaterial bestehende Erhöhungen 2 auf Abstand zueinander gehalten sind. Die Erhöhungen 2 sind zumindest auf einer Seite des Wickelleiters 1, mit Vorteil auf einer der beiden Flachseiten desselben, auf dessen ganzer Länge mit Abstand zueinander angebracht, so daß zwischen den Windungen Freiräume 3 verbleiben, durch welche ein Kühlmittel, insbesondere Öl, hindurchtreten kann. Es kann aber auch jedes andere bekannte Kühlmittel eingesetzt werden, beispielsweise ein Kühlmittel auf Esterbasis. Die Erhöhungen 2 haben in allen Ausführungsformen eine zumindest annähernd gleichbleibende Höhe.

Die Erhöhungen 2 sind gemäß Fig. 2 als punkt- bzw. kreisförmige Erhöhungen 4 ausgeführt. Sie haben einen sinnvollen Abstand voneinander, der einerseits groß genug ist, um die Freiräume 3 zu bilden, und der andererseits so gering bemessen ist, daß die Windungen des Wickelleiters 1 in einer Wicklung bzw. in einem Drilleiter nicht durchgebogen werden können. Die Erhöhungen 4 können auf einen blanken Wickelleiter 1 oder auch auf einen bereits mit einer Isolierschicht versehenen Wickelleiter 1 aufgebracht werden. Es können auch auf zwei einander gegenüber liegenden Seiten des Wickelleiters 1 Erhöhungen 4 aufgebracht werden, wenn sichergestellt ist, daß dieselben beim Herstellen einer Wicklung bzw. eines Drilleiters nicht miteinander kollidieren.

Statt der punkt- bzw. kreisförmigen Erhöhungen 4 können gemäß Fig. 3 in bevorzugter Ausführungsform auch streifenförmige Erhöhungen 5 mit Abstand zueinander auf den Wickelleiter 1 aufgebracht werden. Die streifenförmigen Erhöhungen 5 können - so wie dargestellt - schräg zur Längsrichtung des Wickelleiters 1 verlaufen und parallel zueinander angeordnet sein. Sie können aber auch im rechten Winkel zur Längsrichtung des Wickelleiters 1 verlaufen und auch nicht parallel zueinander angeordnet sein. Es ist auch möglich, sowohl punkt- bzw. kreisförmige Erhöhungen 4 als auch streifenförmige Erhöhungen 5 in beliebiger Reigenfolge auf einem Wickelleiter 1 anzubringen.

Die Erhöhungen 2 können gemäß Fig. 4 auch als Verdickungen bzw. Aufdickungen 6 einer auf einen Wickelleiter 1 aufgebrachten Isolierschicht 7 ausgeführt sein, die beispielsweise in herkömmlicher Technik aus einem Lack besteht. Für die Anordnung der Verdickungen 6 gilt das gleiche wie für die punkt- bzw. kreisförmigen Erhöhungen 4.

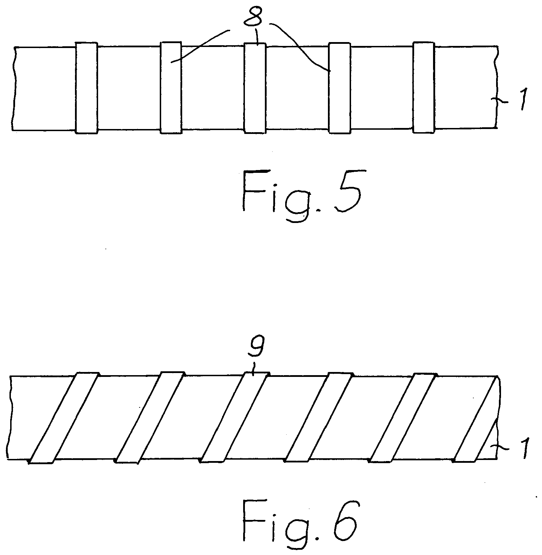

In einer weiteren Ausführungsform kann der Wickelleiter 1 gemäß Fig. 5 auch mit Umwicklungen 8 versehen sein, die denselben mit Abstand zueinander umgeben. Die Umwicklungen 8 können wieder auf einen blanken oder einen bereits isolierten Wickelleiter 1 aufgebracht werden. Sie bestehen mit Vorteil aus Papier.

Gemäß Fig. 6 können die Erhöhungen 2 auch durch ein Band 9 gebildet werden, das mit langem Schlag unter Freilassung von Lücken um den Wickelleiter 1 herumgewickelt ist. Auch das Band 9 kann um einen blanken oder bereits isolierten Wickelleiter 1 herumgewickelt sein. Es besteht vorzugsweise aus Papier.

## Patentansprüche

1. Elektrischer Wickelleiter mit rechteckigem Querschnitt zur Herstellung einer elektrischen Wicklung für elektrische Geräte, die eine als Kühlmittel dienende Flüssigkeit enthalten, in welche die Wicklung in Gebrauchslage eingetaucht ist, wobei zumindest auf einer Seite des Wickelleiters (1) auf seiner ganzen Länge mit Abstand zueinander aus Isoliermaterial bestehende Erhöhungen (2) angebracht sind, **dadurch gekennzeichnet, daß** die Erhöhungen (2) durch Verdickungen (6) einer den Wickelleiter (1) umgebenden Isolierung (7) gebildet sind.

2. Wickelleiter nach Anspruch 1, **dadurch gekennzeichnet, daß** die Erhöhungen (2) als streifenförmige Erhöhungen (5) ausgeführt sind.

3. Wickelleiter nach Anspruch 1, **dadurch gekennzeichnet, daß** die Erhöhungen (2) als punkt- bzw. kreisförmige Erhöhungen (4) ausgeführt sind.

4. Wickelleiter nach Anspruch 1, 2 oder 3, **dadurch gekennzeichnet, daß** die Erhöhungen (2) durch mit Abstand zueinander angeordnete Umwicklungen (8) des Wickelleiters (1) gebildet sind.

## Claims

1. Electrical winding conductor with a rectangular cross section for production of an electrical winding for electrical appliances which contain a liquid, which is used as a coolant and in which the winding is immersed in the in-use position, wherein raised areas, composed of insulating material, are fitted at a distance from one another on at least one side of the winding conductor, over its entire length, **characterized in that** the raised areas are formed by thickened areas of insulation surrounding the winding conductor.

2. Winding conductor according to claim 1, **characterized in that** the raised areas are raised areas in the form of strips.

3. Winding conductor according to claim 1, **characterized in that** the raised areas are raised areas in the form of points or circles.

4. Winding conductor according to claim 1, 2 or 3, **characterized in that** the raised areas are formed by surrounding windings of the winding conductor arranged at a distance from one another.

## Revendications

1. Conducteur électrique enroulé avec une section rectangulaire pour la fabrication d'un enroulement électrique pour des appareils électriques, qui contiennent un liquide servant de fluide de refroidissement, dans lequel l'enroulement est immergé dans une position d'utilisation, des élévations (2) composées d'un matériau isolant étant réalisées à distance les unes des autres, au moins sur un côté du conducteur d'enroulement (1) sur toute sa longueur, **caractérisé en ce que** les élévations (2) sont formées de renflements (6) d'une isolation (7) entourant le conducteur enroulé (1).

2. Conducteur enroulé selon la revendication 1, **caractérisé en ce que** les élévations (2) sont conçues comme des élévations en forme de bandes (5).

3. Conducteur enroulé selon la revendication 1, **caractérisé en ce que** les élévations (2) sont conçues comme des élévations ponctuelles ou circulaires (4).

4. Conducteur enroulé selon la revendication 1, 2 ou 3, **caractérisé en ce que** les élévations (2) sont formées par des enroulements (8), disposés avec une distance entre eux, du conducteur enroulé (1).
